# EUROPÄISCHE PATENTSCHRIFT

(11) **EP 1 338 777 B1**
(45) Veröffentlichungstag und Bekanntmachung des Hinweises auf die Patenterteilung: **24.05.2006**
(21) Anmeldenummer: 02100167.2
(22) Anmeldetag: 21.02.2002
(51) Int. Cl.: F02D 13/02, F01L 13/00

(54) **Viertakt-Ottomotor mit Nockenwellen-Verstellung**
Four stroke engine with a camshaft phasing device
Moteur Otto ayant un variateur de phase de l'arbre à cammes

(43) Veröffentlichungstag der Anmeldung: 27.08.2003
(60) Teilanmeldung: 04103871.2
(73) Patentinhaber: Ford Global Technologies, LLC., Dearborn MI 48126 (US)
(72) Erfinder: Phlips, Patrick Joseph, 50858, Koeln (DE)
(74) Vertreter: Drömer, Hans-Carsten

(56) Entgegenhaltungen:
- FR-A- 2 796 418
- US-A- 4 084 557
- US-A- 4 138 973
- US-A- 5 123 388
- US-A- 5 233 948
- US-A- 5 682 854
- PATENT ABSTRACTS OF JAPAN vol. 1997, no. 03, 31. März 1997 (1997-03-31) & JP 08 303282 A (TOYOTA MOTOR CORP), 19. November 1996 (1996-11-19)

## Beschreibung

Die Erfindung betrifft einen Viertakt-Ottomotor mit mindestens einem Einlaßventil und einem Auslaßventil pro Zylinder, die von einer gemeinsamen Nockenwelle mit einer Verstelleinrichtung betätigt werden. Ferner betrifft die Erfindung ein Verfahren zur Steuerung eines derartigen Viertakt-Ottomotors durch eine koordinierte Regelung des Luft-Kraftstoff-Gemisches, der Nockenwellen-Verstellung und des Drosselklappenwinkels.

In Automobilen verwendete Brennkraftmaschinen mit Fremdzündung ("Ottomotoren") werden häufig mit einer stöchiometrischen Luft-Kraftstoff-Mischung betrieben, welche eine sehr effiziente Nachbehandlung der Emissionen und eine Drosselung zum Zwecke der Lastregelung erlaubt. Als Kraftstoff wird dabei fast ausschließlich Benzin verwendet. Die bei derartigen Motoren mit der Drosselung und dem stöchiometrischen Betrieb bei Teillast verbundenen Kraftstoffverluste können durch einen Magerbetrieb verringert werden. Ein derartiger Magerbetrieb kann entweder vom Typ homogen oder vom Typ geschichtet mit Direkteinspritzung sein. In beiden Fällen können die den Motor verlassenden NOₓ-Emissionen nicht durch einen herkömmlichen Dreiwegekatalysator behandelt werden. Aus diesem Grunde sind Magerbetrieb-NOₓ-Fallen (LNT, Lean NOₓ Traps) entwickelt worden, durch welche auch die aus einer magereren Verbrennung entstehenden Abgase wirksam behandelt werden können. Der Nachteil derartiger, auf Magerbetrieb-NOₓ-Fallen basierender Systeme besteht darin, daß diese sehr viel teurer als Systeme mit herkömmlichen Dreiwegekatalysatoren sind. Im Falle der geschichteten Direkteinspritzung sind ferner die Systeme für Luftzufuhr, Kraftstoffzufuhr, Abgasrückführung und Zündung insgesamt sehr viel komplexer und daher teurer als bei üblichen Motoren.

Ein alternativer "stöchiometrischer" Ansatz zur Verbesserung des Kraftstoffverbrauches besteht darin, kleinere Motoren mit einem Turbolader (booster) zu versehen. Jedoch sind auch hierbei die Zusatzkosten für den Turbolader, den Zwischenkühler und deren Einrichtung erheblich.

Für niedrigpreisige Motoren kommen daher die oben genannten Technologien praktisch nicht in Frage. Für diese Motoren ist eine variable Nockenwellensteuerung realistischer. Die damit erzielbaren Verbesserungen in der Kraftstoffausnutzung konzentrieren sich jedoch auf den Bereich geringerer Lasten. Es besteht daher ein Bedürfnis, die Kraftstoffausnutzung auch im Bereich mittlerer und hoher Lasten zu verbessern. Diese Bereiche werden gerade bei kleinen Motoren, die in Fahrzeugen mit einem geringen Verhältnis von Leistung zu Gewicht eingesetzt werden, häufig verwendet.

In diesem Zusammenhang sind Viertakt-Ottomotoren mit einem Einlaßventil und einem Auslaßventil pro Zylinder von besonderem Interesse, wobei beide Ventile von einer gemeinsamen Nockenwelle betätigt werden. Derartige Motoren sind die einfachsten in Massenproduktion befindlichen Viertakt-Motoren, und sie bilden die Mehrzahl der niedrigpreisigen Vier-, Sechs- und Achtzylindermotoren.

Bei der Nockenwellen-Verstellung handelt es sich um eine bekannte Technologie, die zunehmend bei der Produktion von Benzinmotoren mit zwei obenliegenden Nockenwellen eingesetzt wird. Wenn mit einer Verstellung der Nockenwelle die Öffnungs- und Schließzeiten der angekoppelten Ventile gleichermaßen verschoben werden, spricht man von einer "dual gleichen" Verstellung (dual equal VCT) . Bei Motoren mit einer einzigen Nockenwelle verringert die dual gleiche variable Nockenwellensteuerung die Motoremissionen und den Kraftstoffverbrauch. Eine Strategie zur Phasensteuerung derartiger Nockenwellen wird bei Stein et al. (Dual Equal VCT - A Variable Camshaft Timing Strategy for Improved Fuel Economy and Emissions, SAE Technical Paper 950975) erläutert. Der Kraftstoffverbrauch bei Teillast wird durch Hinzufügung von verdünnendem Gas zur Mischung (spätes Schließen des Auslaßventils und Öffnen des Einlaßventils), durch Erhöhung des effektiven Expansionsverhältnisses (spätes Öffnen des Auslaßventils) und Reduzierung der Pumpverluste durch Reduzierung des effektiven Hubraumes (spätes Schließen der Einlaßventile) verbessert. Dies alles wird erreicht durch ein verspätetes Öffnens sowohl der Auslaß- als auch der Einlaßventile bei Teillast. Die Einschränkungen dieses Verfahrens bestehen jedoch darin, daß die Verbesserung der Kraftstoffausnutzung auf die untere Hälfte des Lastbereiches konzentriert ist.

Darüber hinaus ist eine als "Atkinsonzyklus" bezeichnete Steuerungstechnik bekannt, durch welche die Motoreffizienz insbesondere bei höheren Lasten gesteigert werden kann. Eine Definition und Analyse des Otto-Atkinsonzyklus, der ein variables Schließen der Einlaßventile und ein veränderliches Brennkammervolumen erfordert, findet sich bei Luria et al. (The Otto-Atkinson engine, a new concept in automotive economy, SAE Technical Paper 820352) und Boggs et al. (The Otto-Atkinson engine - Fuel Economy and Emission Results and Hardware Design, SAE Technical Paper 950089). In der einfachsten Form erfordert der Atkinsonzyklus nur ein erhöhtes Kompressionsverhältnis und ein spätes Schließen der Einlaßventile (vgl. Blakey, S., et al., "A Design and Experimental Study of an Otto Atkinson Cycle Engine Using Late Intake Valve Closing", SAE Technical Paper 910451). In der Praxis werden dabei häufig zusätzliche Konstruktionsänderungen auf der Einlaßseite des Motors vorgenommen, um eine optimale Drehmomentkurve des Motors bei Vollast zu erhalten.

Aus der US 5 682 854 ist ein Viertakt-Ottomotor bekannt, bei dem bei hohen Motorlasten ein geringes Kompressionsverhältnis und ein hohes Expansionsverhältnis eingestellt werden. Bei Teillast wird der Motor dagegen in einem Ottozyklus betrieben, bei welchem die Ansaug- und Kompressionstakte gleich den Expansions- und Auslasstakten sind. Charakteristisch für den Motor ist, dass zwei Auslassventile und ein Einlassventil von einer ersten, nicht verstellten Nockenwelle betätigt werden, während für ein weiteres Einlassventil eine separate, phasenverstellbare Nockenwelle bereitgestellt werden muss.

Die US 4 138 973 betrifft eine Brennkraftmaschine, bei der separat das Schließen des Einlassventils verzögert werden kann, um bei geringerer Leistungsanforderung einen Atkinsonzyklus (definiert durch längere Takte für Expansion und Auslass als für Ansaugen und Kompression) anzusteuern, während der Motor bei hoher Last in einem Ottozyklus betrieben wird. Das Öffnen des Einlassventils sowie die Steuerung der Auslassventile werden nicht verändert.

Die Ansteuerung eines Ottozyklus bei hoher Last und eines Atkinsonzyklus bei Teillast wird auch bei der US 5 233 948 zugrunde gelegt. Erreicht wird dies dadurch, dass eines von zwei Einlassventilen sowie ein Auslassventil unabhängig voneinander phasenverschoben werden können.

Des Weiteren zeigt auch die US 4 084 557 eine Brennkraftmaschine, die bei Volllast im Ottozyklus und bei Teillast im Atkinsonzyklus betrieben werden soll, was durch eine separate Variation des Schließens des Einlassventils erreicht wird, während das Öffnen des Einlassventils sowie die Steuerung der Auslassventile unverändert bleibt.

Vor diesem Hintergrund war es Aufgabe der vorliegenden Erfindung, die Kraftstoffausnutzung in einem Viertakt-Ottomotor mit einem Einlaßventil und einem Auslaßventil pro Zylinder, die von einer Nockenwelle mit einer Verstelleinrichtung betätigt werden, zu verbessern.

Diese Aufgabe wird durch einen Viertakt-Ottomotor mit den Merkmalen des Anspruchs 1 gelöst.

Vorteilhafte Ausgestaltungen sind in den Unteransprüchen enthalten.

Der erfindungsgemäße Viertakt-Ottomotor mit mindestens einem Einlaßventil und einem Auslaßventil pro Zylinder sowie einer gemeinsamen Nockenwelle mit einer Verstelleinrichtung für die genannten Ventile ist dadurch gekennzeichnet, daß dieser derart eingerichtet ist, daß dieser im Zustand der Frühverstellung der Nockenwelle im Atkinsonzyklus arbeitet.

Mit einem derartigen Motor lassen sich die Vorteile des Atkinsonzyklus erzielen, d. h. eine Steigerung der Motoreffizienz bei höheren Lasten. Die Kombination eines Atkinsonzyklus mit einem Ottomotor mit zwei Ventilen erzielt ferner einen synergetischen Effekt dadurch, daß die begrenzte spezifische Leistung dieses Motors gut zur begrenzten spezifischen Leistung des Atkinsonzyklus paßt. Ferner harmoniert der bei Teillasten für eine dual gleiche Nockenwellen-Verstellung eintretende Vorteil einer Einlaßmaskierung gut mit der Notwendigkeit, bei einem Atkinsonzyklus bei Vollast und hoher Drehzahl den Luftfluß zu begrenzen.

Im Rahmen der erfindungsgemäßen Ausgestaltung des Ottomotors weist dieser ein - im Vergleich zu einem herkömmlichen Motor mit Fremdzündung - erheblich erhöhtes Kompressionsverhältnis auf, welches typischerweise über 12 : 1 liegt gegenüber ca. 10 : 1 bei herkömmlichen Motoren.

Ferner ist der Viertakt-Ottomotor vorzugsweise derart eingerichtet, daß das Einlaßventil im Zustand der Frühverstellung der Nockenwelle im Vergleich zu einem herkömmlichen Motor mit Fremdzündung spät geschlossen wird. Das späte Schließen des Einlaßventils kann dabei insbesondere bei 40° bis 80°, vorzugsweise bei 50° bis 60° Kurbelwellenwinkel nach dem unteren Totpunkt BDC des Kolbens stattfinden und somit etwa 40° später als bei herkömmlichen Motoren.

Ferner wird das Einlaßventil - wie bekannt - im Zustand der Frühverstellung der Nockenwelle vorzugsweise vor dem oberen Totpunkt des Kolbens am Ende des Ausstoßtaktes geöffnet.

Weiterhin weist der Ottomotor vorteilhafterweise einen erheblich größeren Hubraum als ein herkömmlicher Motor mit vergleichbarem Leistungsverhalten auf. Durch diesen größeren Hubraum können die mit dem Atkinsonzyklus verbundenen Leistungsverringerungen kompensiert werden.

Gemäß einer Weiterbildung des erfindungsgemäßen Ottomotors enthält dieser ein vorzugsweise elektromagnetisch betätigtes Drosselventil sowie eine Motorsteuerung, wobei die Motorsteuerung mit dem Drosselventil und der Verstelleinrichtung der Nockenwelle verbunden und derart eingerichtet ist, daß diese die beiden genannten Elemente zur Erfüllung von Drehmomentanforderungen koordiniert regelt. Hierdurch wird sichergestellt, daß die verbesserte Kraftstoffausnutzung nicht dazu führt, daß der Motor Leistungsanforderungen durch den Fahrer, die durch eine Betätigung des Gaspedals signalisiert werden, nicht mehr nachkommen kann. Der Motor behält somit ein in etwa gleichbleibend gutes Fahrverhalten.

Weiterhin enthält der Motor vorzugsweise ein Sensorsystem zur Detektion von Klopfzuständen. Derartige Systeme sind aus dem Stand der Technik bekannt und dienen dazu, die vorzeitige Selbstzündung (sogenanntes Klopfen) von Luft-Kraftstoff-Gemischen im Zylinder zu detektieren, damit geeignete Gegenmaßnahmen zur Unterdrückung dieser Vorgänge eingeleitet werden können. Das Sensorsystem sollte vorteilhafterweise in der Lage sein, Klopfzustände über den gesamten Drehzahlbereich des Motors zu detektieren.

Darüber hinaus kann der erfindungsgemäße Ottomotor derart ausgestaltet sein, daß dieser bei hohen Drehzahlen einen verringerten Füllungsgrad aufweist. Dabei kann zur Erreichung dieses Zieles insbesondere der Hub und/oder der Durchmesser des Einlaßventils reduziert, die Länge und/oder der effektive Durchmesser des Einlaßkanals reduziert und/oder das Einlaßventil maskiert sein. Unter einer Maskierung des Einlaßventils wird in diesem Zusammenhang eine spezielle, hochstehende Formgebung des Randes um das Einlaßventil im Inneren des Zylinders verstanden, wie sie z. B. in der US 5 950 582 beschrieben ist. Durch die genannten konstruktiven Maßnahmen zur Reduktion des Füllungsgrades wird die mit der erfindungsgemäßen Ansteuerung der Nockenwelle verbundene Erhöhung des Füllungsgrades wieder kompensiert.

Gemäß einer anderen Weiterbildung weist der erfindungsgemäße Ottomotor eine von der Motorsteuerung kontrollierte Einrichtung zur Veränderung der Kühlmitteltemperatur auf. Insbesondere sollte diese Einrichtung eine aktive Kühlung bewirken können. Hierdurch kann der Gefahr eines eventuellen Klopfens des Motors entgegengewirkt werden.

Die Einrichtung zur Veränderung der Kühlmitteltemperatur kann dabei insbesondere einen Wachsthermostaten mit einer elektrischen Heizung enthalten. Durch einen kontrolliert eingeleiteten Phasenübergang des Wachses kann bei Bedarf Energie aus dem Kühlmittel entnommen oder hinzugefügt werden, um dessen Temperatur in der gewünschten Weise zu verändern.

Die Erfindung betrifft ferner ein Verfahren zur Steuerung eines Viertakt-Ottomotors der vorstehend genannten Art, welcher mindestens ein Einlaßventil und ein Auslaßventil pro Zylinder enthält, die von einer gemeinsamen Nockenwelle mit einer Verstelleinrichtung betätigt werden. Das Verfahren nimmt bei Vollast und insbesondere bei hohen Drehzahlen des Motors eine koordinierte Regelung des Luft-Kraftstoff-Gemisches, der Nockenwellen-Verstellung und des Drosselklappenwinkels vor. Es ist dadurch gekennzeichnet, daß bei Detektion eines Klopfzustandes die folgenden Maßnahmen durchgeführt werden:
a) eine Reduzierung der Kühlmitteltemperatur auf Werte von vorzugsweise deutlich unter 90°C, wobei insbesondere der vorstehend erläuterte Wachsthermostat verwendet werden kann;
b) die Zufuhr eines Luft-Kraftstoff-Gemisches, welches vorzugsweise erheblich magerer ist als ein stöchiometrisches Gemisch; auf diese Weise werden der Kraftstoffverbrauch, die Klopftendenz und die Abgastemperatur gleichzeitig reduziert;
c) die Verspätung der Steuerzeiten, um mit minimaler Drosselung den Füllungsgrad zu verringern;
d) die Drosselung des Motors, wobei vorzugsweise ein elektromagnetisch betätigtes Drosselventil in Koordination mit der Nockenwellensteuerung zum Einsatz kommt.

Bei Vollast und insbesondere bei hohen Motordrehzahlen kann der erfindungsgemäße Viertakt-Ottomotor einen Füllungsgrad aufweisen, welcher in Verbindung mit dem hohen Kompressionsverhältnis übermäßig ist. Je nach den Umgebungsbedingungen wie dem atmosphärischen Druck, der Höhe, der Kraftstoffqualität und dergleichen, kann dies zu einem Klopfen des Motors führen oder nicht. Unter geeigneten Bedingungen kann ein effizienter Motorbetrieb mit akzeptablen Abgastemperaturen durch eine koordinierte Computerregelung des Kraftstoffgemisches, der Nockenwellen-Verstellung und des Drosselklappenwinkels erreicht werden. Sollte jedoch frühzeitig in Abweichung von den Idealbedingungen ein Klopfzustand festgestellt werden, was insbesondere durch ein entsprechendes Sensorsystem geschehen kann, so können die oben genannten Maßnahmen zur Unterdrückung eines derartigen Klopfens eingesetzt werden.

Dabei werden die Maßnahmen a) bis d) vorzugsweise in der genannten Reihenfolge eingeleitet. Das heißt, daß eine bestimmte Maßnahme erst dann begonnen wird, wenn die in der Reihenfolge vorangegangene(n) Maßnahme(n) aus irgendeinem Grunde nicht angewendet werden kann/können oder bereits vollständig ausgeschöpft ist/sind, ohne daß das gewünschte Ergebnis zufriedenstellend reicht ist.

Die Erfindung wird nachfolgend anhand der Figuren beispielhaft näher erläutert. Es zeigen:
- Fig. 1: den Ventilhub eines Auslaßventils und eines Einlaßventils in Abhängigkeit vom Kurbelwellenwinkel bei einer erfindungsgemäßen Ansteuerung im Atkinsonzyklus bei Vollast; und
- Fig. 2: eine Darstellung entsprechend Figur 1 bei einer erfindungsgemäßen Ansteuerung unter Teillast.

Die beiden Figuren zeigen eine Auftragung des Ventilhubes (vertikale Achse) über dem Kurbelwellenwinkel (horizontale Achse) in einem Viertakt-Ottomotor mit mindestens einem Einlaßventil und einem Auslaßventil pro Zylinder, welche von einer gemeinsamen Nockenwelle mit einer Verstelleinrichtung gesteuert werden. Die gestrichelte Kurve 11 entspricht dabei dem Öffnungsverhalten des Auslaßventils bei Normalbetrieb und die gestrichelte Kurve 12 dem Öffnungsverhalten des Einlaßventils bei Normalbetrieb. Zu erkennen ist, daß sich die Öffnungen von Einlaßventil und Auslaßventil im Bereich des oberen Totpunktes (TDC), der zwischen dem Ausstoßtakt und dem Ansaugtakt liegt, etwas überlappen.

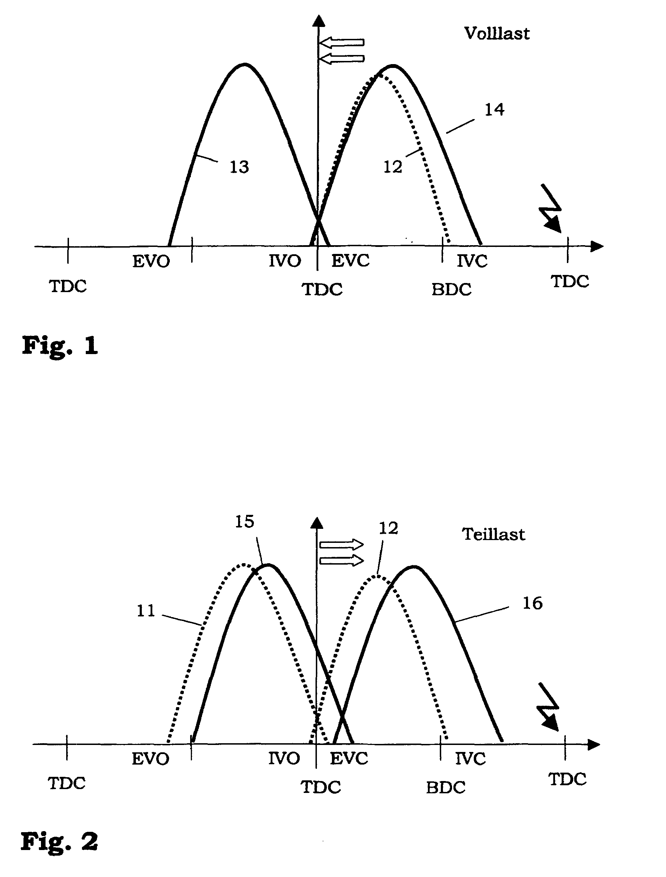

Figur 1 zeigt insbesondere die erfindungsgemäße Steuerung des Einlaßventils und des Auslaßventils unter Vollast. Die Nockenwelle ist dabei derart ausgelegt, daß in Frühstellung das Auslaßventil mit der herkömmlichen Öffnungskurve 13 betrieben wird, die deckungsgleich mit Kurve 11 aus Figur 2 ist. Hingegen erfolgt das Schließen des Einlaßventils (IVC) entsprechend Kurve 14 verzögert gegenüber der Kurve 12 eines herkömmlichen Ottomotors. Insbesondere kann das Einlaßventil erst bei ca. 40° bis 60° nach dem unteren Totpunkt (BDC) geschlossen werden. Auf diese Weise werden bei Vollast des Motors die vom Atkinsonzyklus bekannten Vorteile hinsichtlich der Kraftstoffausnutzung erzielt.

Figur 2 zeigt in einer entsprechenden Darstellung die Ansteuerung des Einlaßventils und des Auslaßventils bei Teillast des Motors. Zu erkennen ist, daß die beiden Öffnungskurven 15 des Auslaßventils beziehungsweise 16 des Einlaßventils in Richtung Spätverstellung verschoben sind, so daß es durch eine erhöhte interne Abgasrückführung, eine Erhöhung des effektiven Expansionsverhältnisses sowie eine Reduzierung der Pumpverluste durch Verringerung des effektiven Hubraumes zu einer Verbesserung der Kraftstoffausnutzung kommt.

Die in den beiden Figuren repräsentierte Regelungsstrategie kann vorteilhafterweise in einem äußerst günstigen Motordesign mit einer gemeinsamen Nockenwelle für ein Einlaßventil und ein Auslaßventil pro Zylinder und mit einer gemeinsamen Verstelleinrichtung erzielt werden.

## Patentansprüche

1. Viertakt-Ottomotor mit einem oder zwei Einlaßventilen und einem Auslaßventil pro Zylinder, wobei die Ventile von einer gemeinsamen Nockenwelle mit einer Verstelleinrichtung betätigt werden,
**dadurch gekennzeichnet, daß**
dieser derart eingerichtet ist, daß er im Zustand der Frühverstellung der Nockenwelle im Atkinsonzyklus arbeitet.

2. Viertakt-Ottomotor nach Anspruch 1,
**dadurch gekennzeichnet, daß**
dieser derart eingerichtet ist, daß im Zustand der Frühverstellung der Nokkenwelle das Einlaßventil spät geschlossen wird, vorzugsweise bei ca. 40° bis 80° Kurbelwellenwinkel nach dem unteren Totpunkt (BDC) des Kolbens.

3. Viertakt-Ottomotor nach einem der Ansprüche 1 oder 2,
**dadurch gekennzeichnet, daß**
im Zustand der Frühverstellung der Nockenwelle das Einlaßventil in der Nähe des oberen Totpunktes (TDC) des Kolbens geöffnet wird.

4. Viertakt-Ottomotor nach einem der Ansprüche 1 bis 3,
**dadurch gekennzeichnet, daß**
dieser ein vorzugsweise elektromagnetisch betätigtes Drosselventil und eine Motorsteuerung aufweist, wobei die Motorsteuerung mit dem Drosselventil und der Verstelleinrichtung verbunden und derart eingerichtet ist, daß sie diese zur Erfüllung von Drehmomentanforderungen koordiniert regelt.

5. Viertakt-Ottomotor nach einem der Ansprüche 1 bis 4,
**dadurch gekennzeichnet, daß**
dieser ein Sensorsystem zur Detektion von Klopfzuständen aufweist.

6. Viertakt-Ottomotor nach einem der Ansprüche 1 bis 5,
**dadurch gekennzeichnet, daß**
dieser derart ausgestaltet ist, daß er bei hohen Drehzahlen einen verringerten Füllungsgrad aufweist, wobei insbesondere der Hub und/oder der Durchmesser des Einlaßventils reduziert, die Länge und/oder der effektive Durchmesser des Einlaßkanals reduziert und/oder das Einlaßventil maskiert ist.

7. Viertakt-Ottomotor nach einem der Ansprüche 1 bis 6,
**dadurch gekennzeichnet, daß**
dieser eine von der Motorsteuerung kontrollierte Einrichtung zur Veränderung der Kühlmitteltemperatur aufweist.

8. Viertakt-Ottomotor nach Anspruch 7,
**dadurch gekennzeichnet, daß**
die Einrichtung einen Wachsthermostaten mit einer elektrischen Heizung enthält.

9. Viertakt-Ottomotor nach einem der Ansprüche 1 bis 8
**gekennzeichnet durch**
eine koordinierte Regelung des Luft-Kraftstoff-Gemisches, der Nockenwellen-Verstellung und des Drosselklappenwinkels,
gemäß der bei Detektion eines Klopfzustandes folgende Maßnahmen durchgeführt werden:
a) Reduzierung der Kühlmitteltemperatur auf unter 90°C;
b) Zufuhr eines mageren Luft-Kraftstoff-Gemisches;
c) Verzögerung der Nockenwellen-Steuerung;
d) Drosselung des Motors.

10. Viertakt-Ottomotor nach Anspruch 9,
**dadurch gekennzeichnet, daß**
jede der Maßnahmen a) bis d) erst eingeleitet wird, wenn die in der genannten Reihenfolge vorangegangenen Maßnahmen nicht durchgeführt werden können oder erschöpft sind.

## Claims

1. Four-stroke spark-ignition engine having one or two inlet valves and one exhaust valve per cylinder, the valves being actuated by a common camshaft having a variable timing device,
**characterized in that**
this is set up in such a way that with the camshaft advanced it functions on the Atkinson cycle.

2. Four-stroke spark-ignition engine according to Claim 1,
**characterized in that**
this is set up in such a way that with the camshaft advanced the inlet valve is closed late, preferably at a crankshaft angle of approximately 40° to 80° after the bottom dead centre (BDC) of the piston.

3. Four-stroke spark-ignition engine according to one of Claims 1 or 2,
**characterized in that**
with the camshaft advanced the inlet valve is opened close to the top dead centre (TDC) of the piston.

4. Four-stroke spark-ignition engine according to one of Claims 1 to 3,
**characterized in that**
this has a preferably solenoid-actuated throttle valve and an engine management system, the engine management system being connected to the throttle valve and the variable timing device and set up in such a way that it co-ordinates control of these in order to satisfy torque requirements.

5. Four-stroke spark-ignition engine according to one of Claims 1 to 4,
**characterized in that**
this has a sensor system for the detection of engine knock conditions.

6. Four-stroke spark-ignition engine according to one of Claims 1 to 5,
**characterized in that**
this is designed in such a way that its volumetric efficiency at high engine speeds is reduced, in particular by reducing the lift and/or the diameter of the inlet valve, reducing the length and/or the inside diameter of the inlet port and/or masking the inlet valve.

7. Four-stroke spark-ignition engine according to one of Claims 1 to 6,
**characterized in that**
this has a device for varying the coolant temperature controlled by the engine management system.

8. Four-stroke spark-ignition engine according to Claim 7,
**characterized in that**
the device contains a waxstat with electrical heating.

9. Four-stroke spark-ignition engine according to one of Claims 1 to 8 **characterized by** coordinated control of the air-fuel mixture, the variable camshaft timing and the throttle valve angle,
according to which
on detection of an engine knock condition the following measures are undertaken:
a) Reduction of the coolant temperature to less than 90°C;
b) Delivery of a leaner air-fuel mixture;
c) Delay of the variable camshaft timing;
d) Engine throttling.

10. Four-stroke spark-ignition engine according to Claim 9,
**characterized in that**
each of the measures a) to d) is only initiated if the prior ranking measures cannot be undertaken or have been exhausted.

## Revendications

1. Moteur à allumage par étincelle à quatre temps, comprenant une ou deux soupapes d'admission et une soupape d'échappement par cylindre, dans lequel les soupapes sont actionnées par un arbre à cames commun avec un dispositif de déphasage,
**caractérisé en ce que**
celui-ci est prévu de telle sorte qu'il fonctionne dans un cycle Atkinson dans l'état de déphasage avancé de l'arbre à cames.

2. Moteur à allumage par étincelle à quatre temps selon la revendication 1,
**caractérisé en ce que**
celui-ci est prévu de telle sorte que dans l'état de déphasage avancé de l'arbre à cames, la soupape d'admission soit fermée avec un retard, de préférence à un angle d'environ 40° à 80° du vilebrequin après le point mort bas (BDC) du piston.

3. Moteur à allumage par étincelle à quatre temps selon l'une quelconque des revendications 1 ou 2,
**caractérisé en ce que**
dans l'état de déphasage avancé de l'arbre à cames, la soupape d'admission est ouverte à proximité du point mort haut (TDC) du piston.

4. Moteur à allumage par étincelle à quatre temps selon l'une quelconque des revendications 1 à 3,
**caractérisé en ce que**
celui-ci présente un papillon actionné de préférence par voie électromagnétique, et une commande de moteur, la commande de moteur étant liée au papillon et au dispositif de déphasage et étant prévue de telle sorte qu'elle régule ce dernier de manière coordonnée pour satisfaire aux exigences de couple.

5. Moteur à allumage par étincelle à quatre temps selon l'une quelconque des revendications 1 à 4,
**caractérisé en ce que**
celui-ci présente un système de capteur pour détecter des états de détonation.

6. Moteur à allumage par étincelle à quatre temps selon l'une quelconque des revendications 1 à 5,
**caractérisé en ce que**
celui-ci est configuré de telle sorte qu'il présente, aux hauts régimes, un degré de remplissage réduit, la levée et/ou le diamètre de la soupape d'admission étant en particulier réduit, la longueur et/ou le diamètre effectif du conduit d'admission étant réduit(e) et/ou la soupape d'admission étant masquée.

7. Moteur à allumage par étincelle à quatre temps selon l'une quelconque des revendications 1 à 6,
**caractérisé en ce que**
celui-ci présente un dispositif contrôlé par la commande de moteur pour faire varier la température du réfrigérant.

8. Moteur à allumage par étincelle à quatre temps selon la revendication 7,
**caractérisé en ce que**
le dispositif contient un thermostat à cire avec chauffage électrique.

9. Moteur à allumage par étincelle à quatre temps selon l'une quelconque des revendications 1 à 8,
**caractérisé par**
une régulation coordonnée du mélange air-carburant, du déphasage de l'arbre à cames et de l'angle du papillon,
selon laquelle, lors de la détection d'un état de détonation, les mesures suivantes sont prises :
a) réduction de la température du réfrigérant à moins de 90°C ;
b) apport d'un mélange air-carburant plus pauvre ;
c) temporisation de la commande de l'arbre à cames ;
d) étranglement du moteur.

10. Moteur à allumage par étincelle à quatre temps selon la revendication 9,
**caractérisé en ce que**
chacune des mesures a) à d) est introduite lorsque les mesures précédentes dans ladite succession de mesures ne peuvent pas être mises en oeuvre ou sont épuisées.
